# EUROPEAN PATENT APPLICATION

(11) **EP 2 083 372 A1**
(43) Date of publication of application: **29.07.2009**
(21) Application number: 07829977.3
(22) Date of filing: 17.10.2007
(51) Int. Cl.: G06F 21/22, G06F 21/24

(54) **APPLICATION INFORMATION FALSIFICATION MONITORING DEVICE AND METHOD**

(30) Priority: 20.10.2006 JP 2006286374
(71) Applicant: Panasonic Corporation, Kadoma-shi Osaka 571-8501 (JP)
(72) Inventor: OHYAMA, Takashi, Osaka 540-6207 (JP); KOBAYASHI, Koji, Osaka 540-6207 (JP); KOGA, Akio, Osaka 540-6207 (JP); TAKAI, Seiji, Osaka 540-6207 (JP); TSUZUKI, Shigenori, Osaka 540-6207 (JP)
(74) Representative: Gassner, Wolfgang
(86) International application number: PCT/JP2007/070243
(87) International publication number: WO 2008/047830

(57) **Abstract**

A tampering monitoring apparatus (10) for monitoring whether or not application information in an information processing device (100) is tampered includes: a tampering verification program storage section (117) for storing a tampering verification program for verifying whether or not the application information is tampered: a first processing section (110) capable of verifying whether or not the application information is tampered, by using the tampering verification program: and a second processing section (200), communicably connected to the first processing section (110), capable of receiving the tampering verification program from the first processing section (110) and verifying whether or not the received tampering verification program is tampered. When the second processing section (200) verifies that the tampering verification program is not tampered, the first processing section (110) verifies whether or not the application information is tampered, by using the tampering verification program.

## Description

### TECHNICAL FIELD

The present invention relates to an application information tampering monitoring apparatus and method, and more specifically to an application information tampering monitoring apparatus for monitoring whether or not various application information in an information processing device is illegally tampered, and a method performed by the application information tampering monitoring apparatus.

### BACKGROUND ART

In recent years, a problem arises that an application program and/or application data stored in an information processing device is, for example, illegally tampered by computer virus and the like sent via the Internet. As one of measures against this problem, a file monitoring apparatus disclosed in, for example, Patent Document 1 is proposed. This file monitoring apparatus stores monitoring information for monitoring whether or not an electronic file is tampered, and obtains, from the electronic file to be monitored, a parameter value corresponding to the monitoring information. The file monitoring apparatus is able to verify whether or not the electronic file is tampered, by comparing the obtained parameter value with the monitoring information.
Patent Document 1: Japanese Laid-Open Patent Publication No. 2004-13607

### DISCLOSURE OF THE INVENTION

### PROBLEMS TO BE SOLVED BY THE INVENTION

However, in order to protect, against tampering, the tampering verification program for verifying whether or not the tampering is made, the file monitoring apparatus stores a tampering verification program in a region in which security level is high, and verifies, in the region which security level is high, whether or not an electronic file is tampered by comparing the monitoring information with the parameter value. That is, the file monitoring apparatus performs communication between a low security level region and the high security level region each time whether or not the electronic file is tampered is verified. In order to perform communication between the low security level region and the high security level region, it is necessary to temporarily store data in a buffer provided between those regions. Consequently, in the file monitoring apparatus, a problem arises that significant overhead occurs in the buffer each time whether or not an electronic file is tampered is verified, whereby processing efficiency for verifying whether or not an electronic file is tampered is decreased.

In order to solve the above-mentioned problem, an object of the present invention is to provide an application information tampering monitoring apparatus in which communication overhead in the tampering monitoring apparatus can be suppressed when whether or not an application program or application data in an information processing device is tampered is verified, whereby processing efficiency for verifying whether or not the application program or application data is tampered can be enhanced.

### SOLUTION TO THE PROBLEMS

The present invention is directed to a tampering monitoring apparatus for monitoring whether or not application information is tampered and a method performed by the tampering monitoring apparatus. In order to achieve the above-described object, the tampering monitoring apparatus of the invention includes a first storage section for storing a tampering verification program for verifying whether or not the application information is tampered, a second storage section to which, in response to an instruction for executing a processing, the tampering verification program stored in the first storage section is copied, a program tampering verification section for verifying whether or not the tampering verification program, copied to the second storage section, is tampered, and an application information tampering verification section for verifying, in accordance with a verification result, from the program tampering verification section, indicating that the tampering verification program is not tampered, whether or not the application information is tampered, by using the tampering verification program.

According to the present invention, the application information tampering verification section stores the tampering verification program. In the case where the program tampering verification section verifies that the tampering verification program is not tampered, the application information tampering verification section verifies whether or not the application information is tampered by using the tampering verification program. Accordingly, when whether or not the application information is tampered is verified multiple times, the application information tampering verification section need not perform communication with the program tampering verification section each time. Consequently, communication overhead, which may occur when the application information tampering verification section communicates with the program tampering verification section, can be suppressed. By suppressing the communication overhead, the processing efficiency for verifying whether or not the application information is tampered can be enhanced.

A typical program tampering verification section includes a verification comparison subject acquiring section for generating, based on the tampering verification program, verification comparison subject information, and a verification information comparing section for comparing the verification comparison subject information with verification comparison subject reference information, which indicates that the tampering verification program is not tampered, and verifying that the tampering verification program is not tampered when the verification comparison subject information and the verification comparison subject reference information are coincident with each other.

Further, a typical application information tampering verification section includes an application comparison subject acquiring section for generating application comparison subject information based on the application information, and an application information comparing section for comparing the application comparison subject information with application comparison subject reference information indicating that the application information is not tampered, and verifying that the application information is not tampered when the application comparison subject information and the application comparison subject reference information are coincident with each other.

Here, the application information tampering verification section may verify whether or not the application information is tampered, by using the tampering verification program stored in the first storage section, or verify whether or not the application information is tampered, by using the tampering verification program stored in the second storage section. Further, it is preferable that the tampering verification program copied to the second storage section is allowed to be resident therein. Still further, it is desirable that the program tampering verification section performs verification at a security level higher than that for the application information tampering verification section.

It is preferable that the application information tampering verification section further includes an information changing section for stopping, when the application information comparing section verifies that the application information is tampered, an operation based on the application information.

With this configuration, an execution processing using the application information is prevented in the case where it is verified that the tampering verification program is tampered. In the case where the tampering verification program is tampered, the application information is likely to be tampered. Consequently, by preventing the execution processing using the application information, an illegal processing using the tampered application information can be prevented.

Furthermore, it is preferable that each of the verification comparison subject information and the verification comparison subject reference information is a hash value, an electronic signature or a version of the tampering verification program. Similarly, it is preferable that each of the application comparison subject information and the application comparison subject reference information is a hash value, an electronic signature or a version of the tampering verification program.

With this configuration, by performing comparison between the hash values of the tampering verification program, comparison between the electronic signatures thereof, or comparison between the versions thereof, whether or not the tampering verification program is tampered is verified. Further, by performing comparison between the hash values of the application comparison subject information, comparison between the electronic signatures thereof, or comparison between the versions thereof, whether or not the application comparison subject information is tampered is verified. By performing comparison between the hash values, between the electronic signatures, or between the versions, accuracy for verifying whether or not each of the tampering verification program and the application information is tampered can be enhanced.

Further, it is preferable to include a plurality of program tampering verification sections, and the application information tampering verification section verifies, when each of the plurality of program tampering verification sections verifies that the tampering verification program is not tampered, whether or not the application information is tampered, by using the tampering verification program.

With this configuration, each of the plurality of program tampering verification sections verifies whether or not the tampering verification program is tampered, and whether or not the application information is tampered is verified in the case where it is verified in all of the program tampering verification sections that the tampering verification program is not tampered. Accordingly, correctness for verifying whether or not the tampering verification program is tampered can be enhanced as compared to the case where one second processing section verifies whether or not the tampering verification program is tampered.

### EFFECT OF THE INVENTION

According to the present invention, when whether or not an application program or application data is tampered is verified, communication overhead in the tampering monitoring apparatus can be suppressed. Consequently, processing efficiency for verifying whether or not the application program or the application data is tampered can be enhanced.

### BRIEF DESCRIPTION OF THE DRAWINGS

[FIG. 1] FIG. 1 is a block diagram illustrating an information processing device including an application information tampering monitoring apparatus according to a first embodiment of the present invention.
[FIG. 2] FIG. 2 is a sequence diagram illustrating an operation of the application information tampering monitoring apparatus according to the first embodiment of the present invention.
[FIG. 3] FIG. 3 is a block diagram illustrating an information processing device including an application information tampering monitoring apparatus according to a second embodiment of the present invention.
[FIG. 4] FIG. 4 is a sequence diagram illustrating an operation of the application information tampering monitoring apparatus according to the second embodiment of the present invention.

### DESCRIPTION OF THE REFERENCE CHARACTERS

10, 11 application information tampering monitoring apparatus
100, 101 information processing device
110 first processing section
111 application comparison subject acquiring section
112 application information comparing section
113 application comparison reference storage section
114 application capability changing section
115 starting-up section
116 application tampering verification instructing section
130 shared buffer
200, 200-1, 200-2 second processing section
211 verification program comparison reference storage section
212 verification program information comparing section
213 verification program comparison subject acquiring section

### BEST MODE FOR CARRYING OUT THE INVENTION

Embodiments of the present invention will be described with reference to the drawings.

(Embodiment 1)

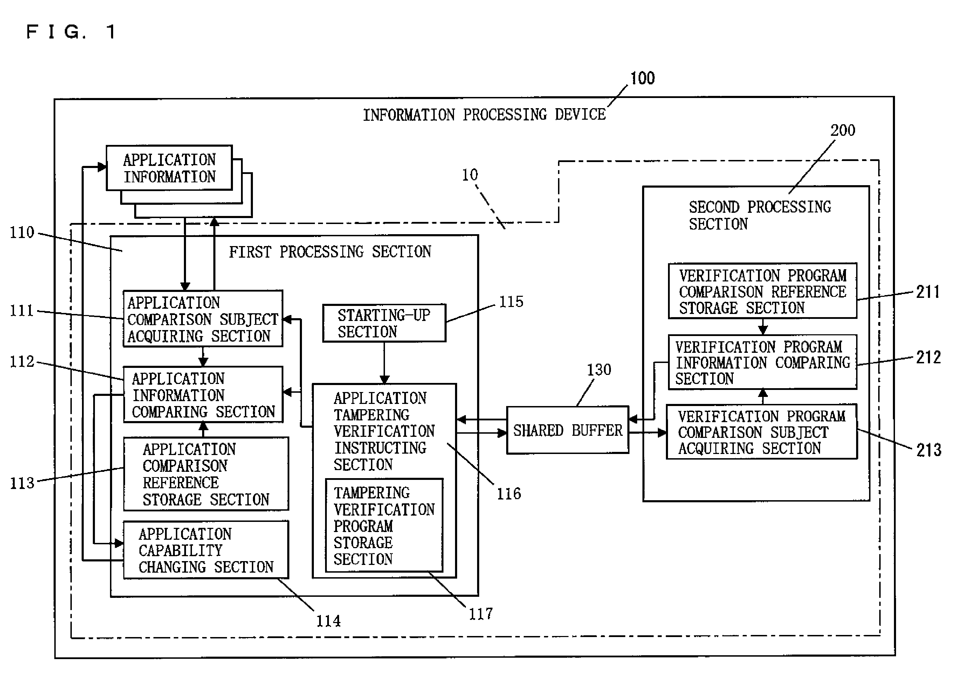

FIG. 1 is a block diagram illustrating an information processing device 100 including an application information tampering monitoring apparatus 10 according to a first embodiment.

The information processing device 100 according to the first embodiment is an information processing device for which whether or not application information stored therein is tampered is to be verified. The information processing device 100 according to the first embodiment is, for example, a consumer appliance. Specifically, the consumer appliance includes, for example, a mobile telephone, a DVD recorder, a car navigation system, a PDA (Personal Digital Assistant) and the like. The application information is, for example, an application program and application data used for executing the application program. Specifically, the application information is, for example, a music reproduction program, which should not be illegally tampered. This music reproduction program can be used to reproduce music data provided by a content provider and the like.

The application information tampering monitoring apparatus 10 according to the first embodiment is used for detecting whether or not application information is tampered.

Initially, the schematic configuration and function of the application information tampering monitoring apparatus 10 according to the first embodiment will be described.

The application information tampering monitoring apparatus 10 includes a first processing section 110 and a second processing section 200 as shown in FIG. 1.

The first processing section 110 includes, in an example shown in the drawing, a tampering verification program storage section 117 for storing a tampering verification program used for verifying whether or not the application information is tampered. The first processing section 110 is able to verify whether or not the application information is tampered, by using the tampering verification program. That is, the components of the first processing section 110, other than the tampering verification program storage section 117, form an application information tampering verification section.

The second processing section 200 is communicably connected to the first processing section 110. The second processing section 200 is able to receive the tampering verification program from the first processing section 110, and verify whether or not the received tampering verification program is tampered. That is, the components of the second processing section 200 forms a program tampering verification section.

In the case where the second processing section 200 verifies that the tampering verification program is not tampered, the first processing section 110 verifies whether or not the application information is tampered, by using the tampering verification program.

Next, the configuration and function of the application information tampering monitoring apparatus 10 according to the first embodiment will be described in detail.

The first processing section 110 includes an application comparison subject information acquiring section (hereinafter, referred to as an application comparison subject acquiring section) 111, an application information comparing section 112, an application comparison reference information storage section (hereinafter, referred to as an application comparison reference storage section) 113, an application capability changing section 114, a starting-up section 115, an application information tampering verification instructing section (hereinafter, referred to as an application tampering verification instructing section) 116, and a tampering verification program storage section 117.

It is possible to configure the first processing section 110 based on software, for example, by installing, on a general-purpose computer, programs for realizing the functional blocks 111, 112, 113, 114, 115, 116 and 117. Also, the functional blocks may be realized based on hardware.

The first processing section 110 monitors whether or not the application information is tampered. When it is detected that the application information is tampered, the first processing section 110 causes, for example, the information processing device 100 to stop an operation based on the application information. Consequently, an illegal execution of the tampered application information can be prevented.

The application tampering verification instructing section 116 , in the example illustrated in the drawing, has the tampering verification program storage section 117. The tampering verification program storage section 117 stores the tampering verification program for verifying whether or not the application information is tampered. The application tampering verification instructing section 116 copies (that is, loads) the tampering verification program read from the tampering verification program storage section 117, in a shared buffer 130. The second processing section 200 reads the copied tampering verification program from the shared buffer 130 and verifies whether or not the read tampering verification program is tampered. The verification result information is transmitted to the application tampering verification instructing section 116, via the shared buffer 130. When the verification result indicating that the tampering verification program is tampered is received, the application tampering verification instructing section 116 inputs, to the application capability changing section 114, instruction information for changing or for deleting the application information. When the verification result indicating that the tampering verification program is not tampered is received, the application tampering verification instructing section 116 inputs, to the application comparison subject acquiring section 111, instruction information for verifying whether or not the application information is tampered.

When the instruction information for verifying whether or not the application information is tampered is received, the application comparison subject acquiring section 111 reads from the application tampering verification instructing section 116, application information for which whether or not the tampering is made is to be verified, and generates application comparison subject information based on the read application information. The application comparison subject information is, for example, a hash value, an electronic signature, a part of binary data or the like, of the application information for which whether or not the tampering is made is to be verified. The application comparison subject information is a value specified uniquely for each application information for which whether or not the tampering is made is to be verified. The application comparison subject information is changed in accordance with the application information for which whether or not the tampering is made is to be verified being tampered.

The application comparison reference storage section 113 stores application comparison reference information generated based on correct application information, which is preliminarily confirmed that it is not tampered. It can be preliminarily confirmed that the application information is not tampered, for example, when the information processing device 100 is produced.

In the case where, for example, there are plural types of application information for which whether or not the tampering is made is to be verified, the application comparison reference information can be set for each type, individually. Alternatively, in the case where there are plural types of application information for which whether or not the tampering is made is to be verified, reference information common to all types may be set as the application comparison reference information. Further, when a version of the application information is upgraded, reference information common to all versions can be set. The application comparison reference information is information corresponding to the application information for which whether or not the tampering is made is to be verified, and is, for example, a hash value, an electronic signature, a part of binary data or the like of the application information, which is preliminarily confirmed, at the time of production, that it is not tampered. The application comparison reference information represents a correct value set for each of the application information for which whether or not the tampering is made is to be verified, and is specified uniquely for each of the application information for which whether or not the tampering is made is to be verified. The application comparison reference information is compared with the application comparison subject information by the application information comparing section 112.

The application information comparing section 112 compares the application comparison subject information obtained from the application comparison subject acquiring section 111, with application comparison reference information obtained from the application comparison reference storage section 113. The application information comparing section 112 verifies that the application information is not tampered when a result of the comparison indicates that both of the information are coincident with each other, and verifies that the application information is tampered when the result of the comparison indicates that both of the information are not coincident with each other. The verification result information is inputted to the application capability changing section 114.

In accordance with the tampering verification result inputted from the application information comparing section 112, the application capability changing section 114 changes an operation, of the information processing device 100, based on the application information or maintains the operation in the normal state. When the verification result inputted from the application information comparing section 112 indicates that there is tampering, the application capability changing section 114 stops an operation, of the information processing device 100, based on the application information, or deletes or changes the application information, for example. Accordingly, the application capability changing section 114 can prevent an illegal execution of the tampered application information. When the verification result indicating that there is no tampering is inputted from the application information comparing section 112, the application capability changing section 114 executes nothing or simply executes, for example, processing for terminating the operation of the application information tampering monitoring apparatus 10. Accordingly, the application information can be executed by the information processing device 100 in a state where it is ensured that the application information is not tampered.

The second processing section 200 is communicably connected to the first processing section 110. However, the second processing section 200 is configured so as to prevent the first processing section 110 from reading a program and data stored therein, and writing a program and data therein. The configuration thereof is not limited to any specific configuration. For example, the configuration is realized by making a type of an operating system, on which the first processing section 110 works, different from a type of an operating system, on which the second processing section 200 works. Alternatively, the specific configuration can be realized by providing hardware (the CPU, a memory and the like) for configuring the first processing section 110 and hardware for configuring the second processing section 200, separately from each other.

The shared buffer 130 is a storage device for communication buffer used for executing communication between the first processing section 110 and the second processing section 200. The shared buffer 130 is a storage device shared by the first processing section 110 and the second processing section 200. The shared buffer 130 is able to temporarily hold information to be transmitted from the first processing section 110 to the second processing section 200. Further, the shared buffer 130 is able to temporarily hold information to be transmitted from the second processing section 200 to the first processing section 110.

The second processing section 200 includes a verification program comparison reference information storage section (hereinafter, referred to as a verification program comparison reference storage section) 211, a verification program information comparing section 212, and a verification program comparison subject information acquiring section (hereinafter, referred to as a verification program comparison subject acquiring section) 213.

It is possible to configure the second processing section 200 based on software, for example, by installing, on a general-purpose computer, programs for realizing the functional blocks 211, 212 and 213. Also, the functional blocks may be realized based on hardware.

When the tampering verification program is inputted from the first processing section 110, the verification program comparison subject acquiring section 213 generates verification program comparison subject information based on the inputted tampering verification program. The verification program comparison subject information is, for example, a hash value, an electronic signature, a part of binary data or the like, of the tampering verification program for which whether or not the tampering is made is to be verified. The verification program comparison subject information represents a value specified uniquely for each of the tampering verification programs for which whether or not the tampering is made is to be verified. The verification program comparison subject information is changed in accordance with the tampering verification program for which whether or not the tampering is made is to be verified being tampered.

The verification program comparison reference storage section 211 stores verification program comparison reference information generated based on the correct tampering verification program, which is preliminarily confirmed that it is not tampered. It can be preliminarily confirmed that the tampering verification program is not tampered, for example, when the information processing device 100 is produced. In the case where, for example, there are plural types of the tampering verification programs for which whether or not the tampering is made is to be verified, the verification program comparison reference information can be set for each type, individually. Alternatively, in the case where there are plural types of tampering verification programs for which whether or not the tampering is made is to be verified, reference information common to all types can be set as the verification program comparison reference information. Further, when a version of the tampering verification program is upgraded, reference information common to all versions can be set. The verification program comparison reference information is information corresponding to the tampering verification program for which whether or not the tampering is made is to be verified, and is, for example, a hash value, an electronic signature, a part of binary data or the like of the tampering verification program, which is preliminarily confirmed that it is not tampered, when the information processing device 100 is produced. The verification program comparison reference information represents a correct value set for each of the tampering verification programs for which whether or not the tampering is made is to be verified. The verification program comparison reference information is specified uniquely for each tampering verification program for which whether or not the tampering is made is to be verified. The verification program comparison reference information is compared with the verification program comparison subject information by the verification program information comparing section 212.

The verification program information comparing section 212 compares the verification program comparison subject information obtained from the verification program comparison subject acquiring section 213, with the verification program comparison reference information obtained from the verification program comparison reference storage section 211. The verification program information comparing section 212 verifies that the tampering verification program is not tampered when a result of the comparison indicates that both of the information are coincident with each other, and verifies that the tampering verification program is tampered when the result of the comparison indicates that both of the information are not coincident with each other. The verification result information is inputted to the application tampering verification instructing section 116, via the shared buffer 130.

Next, an operation of the application information tampering monitoring apparatus 10 according to the first embodiment will be described.

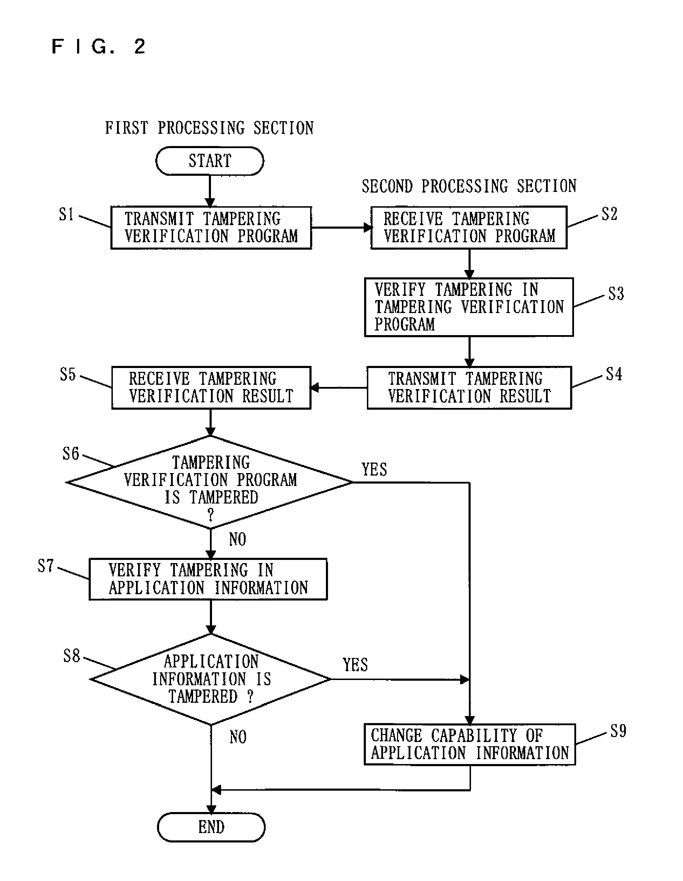

FIG. 2 is a sequence diagram illustrating an operation of the application information tampering monitoring apparatus 10 according to the first embodiment.

Initially, in response to an instruction from the starting-up section 115 for execution of the processing, the application tampering verification instructing section 116 transmits the tampering verification program stored in the tampering verification program storage section 117 to the verification program comparison subject acquiring section 213, via the shared buffer 130 (step S1). The verification program comparison subject acquiring section 213 in the second processing section 200 receives the tampering verification program (step S2). The verification program comparison subject acquiring section 213 generates the verification program comparison subject information based on the received tampering verification program. The verification program information comparing section 212 verifies whether or not the tampering verification program is tampered, by comparing the verification program comparison subject information obtained by the verification program comparison subject acquiring section 213, with the verification program comparison reference information preliminarily stored in the verification program comparison reference storage section 211 (step S3). The verification program information comparing section 212 transmits the result of the tampering verification to the application tampering verification instructing section 116 (step S4).

The application tampering verification instructing section 116 receives the result of the tampering verification (step S5), and verifies, in accordance with the result, whether to perform verification concerning whether or not the application information is tampered (step S6). When the verification result, from the verification program information comparing section 212, indicating that there is tampering is received, the application tampering verification instructing section 116 inputs, to the application capability changing section 114, instruction information for, for example, changing or deleting the application information. The application capability changing section 114 stops an operation, of the information processing device 100, based on the application information, or deletes or changes the application information, for example (step S9). When the verification result indicating that the tampering verification program is not tampered is received, the application tampering verification instructing section 116 inputs, to the application comparison subject acquiring section 111, instruction information for verifying whether or not the application information is tampered.

The application comparison subject acquiring section 111 reads the application information for which whether or not the tampering is made is to be verified, and generates application comparison subject information based on the read application information. The application information comparing section 112 compares application comparison subject information obtained from the application comparison subject acquiring section 111, with the application comparison reference information obtained from the application comparison reference storage section 113. The application information comparing section 112 verifies that the application information is not tampered when a result of the comparison indicates that both of the information are coincident with each other, and verifies that the application information is tampered when the result of the comparison indicates that both of the information are not coincident with each other. The verification result information is inputted to the application capability changing section 114 (step S7). In accordance with the result of the tampering verification performed by the application information comparing section 112, the application capability changing section 114 changes an operation, of the information processing device 100, based on the application information, or maintains the operation in the normal state (step S8).

When the verification result indicating that there is tampering is inputted from the application information comparing section 112, the application capability changing section 114 stops an operation, of the information processing device 100, based on the application information, or deletes or changes the application information, for example (step S9). When the verification result indicating that there is no tampering is inputted from the application information comparing section 112, the application capability changing section 114 executes nothing or simply executes processing for terminating the operation of the application information tampering monitoring apparatus 10, for example. Accordingly, the application information can be executed by the information processing device 100 in a state where it is ensured that the application information is not tampered.

As described above, in the application information tampering monitoring apparatus 10 according to the first embodiment, the number of times communication between the first processing section 110 and the second processing section 200 is made is restrained when whether or not the application program and/or the application data are tampered is verified, whereby communication overhead in the application information tampering monitoring apparatus 10 can be suppressed. Consequently, the processing efficiency for verifying whether or not the application program and/or the application data are tampered can be enhanced.

Further, the application capability changing section 114 can prevent an illegal execution of the tampered application information.

Furthermore, although the tampering verification program is stored in the application tampering verification instructing section 116 in an example shown in FIG. 1, the first embodiment is not restricted to the example. For example, in the case where the shared buffer 130 is used as one of the components of the first processing section 110, the tampering verification program may be resident in the shared buffer 130. In such a case, the tampering verification program stored in the shared buffer 130 is transmitted to the verification program comparison subject acquiring section 213. The second processing section 200 verifies whether or not the tampering verification program is tampered. The verification result is transmitted to the application tampering verification instructing section 116, via the shared buffer 130. Also by executing such operations, the number of times communication between the first processing section 110 and the second processing section 200 is made is restrained when whether or not the application program and/or the application data are tampered is verified, whereby communication overhead in the application information tampering monitoring apparatus 10 can be suppressed.

(Embodiment 2)
Next, the second embodiment of the present invention will be described.

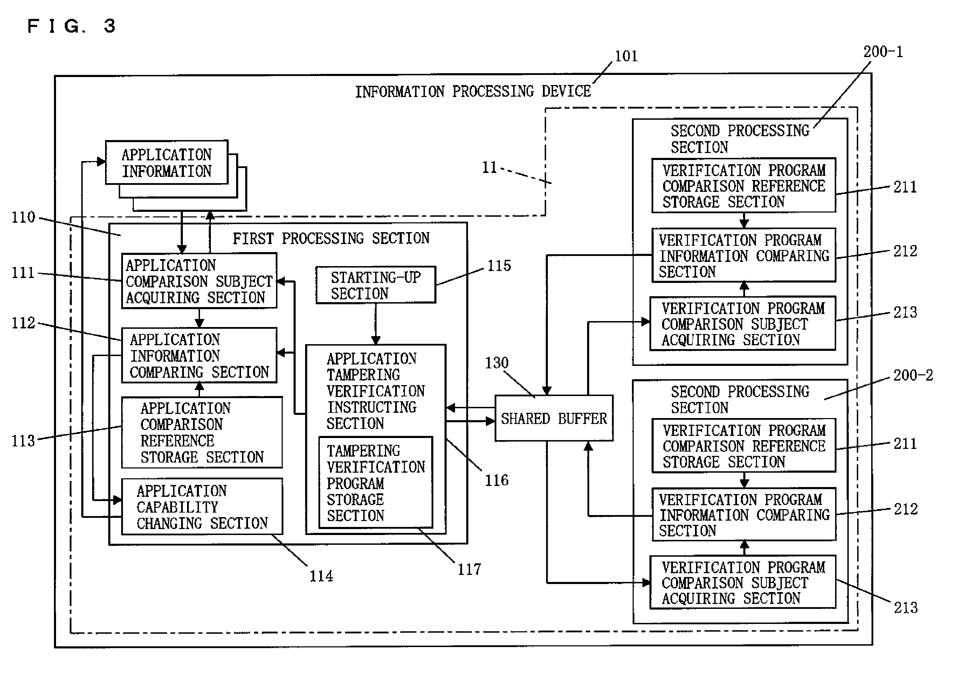

FIG. 3 is a block diagram illustrating an information processing device 101 including an application information tampering monitoring apparatus 11 according to the second embodiment.

The second embodiment and the first embodiment have the same configuration except for the following components. The components similar to those in the first embodiment are denoted by the same reference numeral as used for the first embodiment, and description thereof is omitted as necessary.

The application information tampering monitoring apparatus 11 according to the second embodiment includes a plurality of second processing sections 200. Although in an example shown in FIG. 3, the number of the second processing sections 200 provided is two, the number thereof may be any number greater than one. In the example shown in FIG. 3, for convenience, one of the two second processing sections is referred to as a second processing section 200-1, and the other thereof is referred to as a second processing section 200-2. When all of the second processing sections, 200-1 and 200-2, verify that a tampering verification program is not tampered, the first processing section 110 verifies whether or not the application information is tampered, by using the tampering verification program. The plurality of second processing sections, 200-1 and 200-2, are connected to one shared buffer 130.

Next, an operation of the application information tampering monitoring apparatus 11 according to the second embodiment will be described.

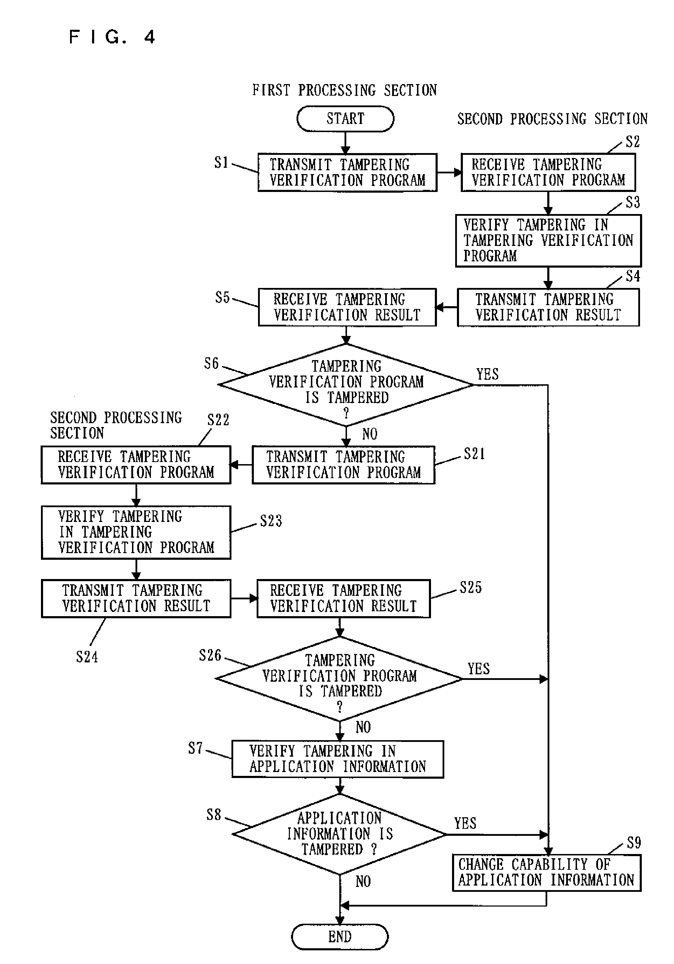

FIG. 4 is a sequence diagram illustrating an operation of the application information tampering monitoring apparatus 11 according to the second embodiment. It is noted that the same processing as in the sequence diagram of FIG. 2 is denoted by the same reference numeral as used for FIG. 2.

Initially, in response to an instruction from the starting-up section 115, the application tampering verification instructing section 116 transmits a tampering verification program stored in the tampering verification program storage section 117, to the verification program comparison subject acquiring section 213 in the second processing section 200-1, via the shared buffer 130 (step S1). The verification program comparison subject acquiring section 213 in the second processing section 200-1 receives the tampering verification program (step S2). The verification program comparison subject acquiring section 213 generates verification program comparison subject information based on the received tampering verification program. The verification program information comparing section 212 verifies whether or not the tampering verification program is tampered, by comparing the verification program comparison subject information obtained by the verification program comparison subject acquiring section 213, with the verification program comparison reference information preliminarily stored in the verification program comparison reference storage section 211 (step S3). The verification program information comparing section 212 transmits the result of the tampering verification to the application tampering verification instructing section 116 (step S4).

The application tampering verification instructing section 116 receives the result of the tampering verification (step S5). In accordance with the result, the application tampering verification instructing section 116 verifies whether to cause the second processing section 200-2 to verify whether or not the tampering verification program is tampered (step S6). When the verification result from the verification program information comparing section 212 indicates that there is tampering, the application tampering verification instructing section 116 inputs, to the application capability changing section 114, instruction information for, for example, changing or deleting the application information. The application capability changing section 114 stops an operation, of the information processing device 101, based on the application information, or deletes or changes the application information, for example (step S9). When the verification result indicates that the tampering verification program is not tampered, the application tampering verification instructing section 116 transmits the tampering verification program, which has been already verified, by the second processing section 200-1, that it is not tampered, to the verification program comparison subject acquiring section 213 in the second processing section 200-2, via the shared buffer 130 (step S21).

The verification program comparison subject acquiring section 213 in the second processing section 200-2 receives the tampering verification program (step S22). The verification program comparison subject acquiring section 213 generates verification program comparison subject information based on the received tampering verification program. The verification program information comparing section 212 verifies whether or not the tampering verification program is tampered, by comparing the verification program comparison subject information inputted from the verification program comparison subject acquiring section 213, with the verification program comparison reference information preliminarily stored in the verification program comparison reference storage section 211 (step S23). The verification program information comparing section 212 transmits the result of the tampering verification to the application tampering verification instructing section 116 (step S24).

The application tampering verification instructing section 116 receives the result of the tampering verification (step S25). In accordance with the result, the application tampering verification instructing section 116 verifies whether to perform verification concerning whether or not the application information is tampered (step S26). When the verification result from the verification program information comparing section 212 indicates that there is tampering, the application tampering verification instructing section 116 inputs, to the application capability changing section 114, instruction information for, for example, changing or deleting the application information. The application capability changing section 114 stops an operation, of the information processing device 101, based on the application information, or deletes or changes the application information, for example (step S9).

When the verification result indicates that the tampering verification program is not tampered, the application tampering verification instructing section 116 inputs, to the application comparison subject acquiring section 111, instruction information for verifying whether or not the application information is tampered. The application comparison subject acquiring section 111 reads the application information for which whether or not the tampering is made is to be verified, and generates application comparison subject information based on the read application information. The application information comparing section 112 compares the application comparison subject information obtained from the application comparison subject acquiring section 111, with the application comparison reference information obtained from the application comparison reference storage section 113. The application information comparing section 112 verifies that the application information is not tampered when a result of the comparison indicates that both of the information are coincident with each other, and verifies that the application information is tampered when the result of the comparison indicates that both of the information are not coincident with each other. The verification result information is inputted to the application capability changing section 114 (step S7).

In accordance with the result of the tampering verification performed by the application information comparing section 112, the application capability changing section 114 changes an operation, of the information processing device 101, based on the application information, or maintains the operation in the normal state (step S8). When the verification result indicating that there is tampering is inputted from the application information comparing section 112, the application capability changing section 114 stops an operation, of the information processing device 101, based on the application information, or deletes or changes the application information, for example (step S9). When the verification result indicating that there is no tampering is inputted from the application information comparing section 112, the application capability changing section 114 executes nothing or simply executes processing for terminating the operation of the application information tampering monitoring apparatus 11, for example. Accordingly, the application information can be performed by the information processing device 101 in a state where it is ensured that the application information is not tampered.

In the application information tampering monitoring apparatus 11 according to the second embodiment, whether or not the tampering verification program is tampered is verified by the plurality of the second processing sections, 200-1 and 200-2, and whether or not the application information is tampered is verified when all the tampering verification indicate that there is no tampering. Accordingly, accuracy for verifying whether or not the tampering verification program is tampered can be enhanced as compared to the case where one second processing section verifies whether or not the tampering verification program is tampered. Further, as long as all of the verification program comparison reference information stored in the plurality of the second processing sections, 200-1 and 200-2, are not tampered or destructed, it can be ensured that the tampering verification program is not tampered.

### INDUSTRIAL APPLICCAPABILITY

The application information tampering monitoring apparatus according to the present invention is the tampering monitoring apparatus for monitoring whether or not the application information stored in the information processing device is tampered. The application information tampering monitoring apparatus is applicable to an information processing device and the like for which it is necessary to guarantee correctness of application information including valuable information such as information of rights of valuable content including music and video, and personal information. The application information tampering monitoring apparatus is applicable to wide range of information processing devices such as a mobile telephone, a car navigation system, a PDA and the like.

## Claims

1. A tampering monitoring apparatus (10, 11) for monitoring whether or not application information is tampered, the tampering monitoring apparatus comprising:
a first storage section (117) for storing a tampering verification program for verifying whether or not the application information is tampered;
a second storage section (130) to which, in response to an instruction for executing a processing, the tampering verification program stored in the first storage section (117) is loaded;
at least one program tampering verification section (200) for verifying whether or not the tampering verification program, loaded to the second storage section (130), is tampered; and
an application information tampering verification section (111, 112, 113, 114, 116) for verifying, in accordance with a verification result, from the at least one program tampering verification section (200), indicating that the tampering verification program is not tampered, whether or not the application information is tampered, by using the tampering verification program.

2. The tampering monitoring apparatus according to claim 1,
wherein the at least one program tampering verification section (200) includes:
a verification comparison subject acquiring section (213) for generating, based on the tampering verification program, verification comparison subject information; and
a verification information comparing section (212) for comparing the verification comparison subject information with verification comparison subject reference information which indicates that the tampering verification program is not tampered, and verifying that the tampering verification program is not tampered when the verification comparison subject information and the verification comparison subject reference information are coincident with each other.

3. The tampering monitoring apparatus according to claim 1,
wherein the application information tampering verification section (111, 112, 113, 114, 116) includes:
an application comparison subject acquiring section (111) for generating application comparison subject information based on the application information; and
an application information comparing section (112) for comparing the application comparison subject information with application comparison subject reference information indicating that the application information is not tampered, and verifying that the application information is not tampered when the application comparison subject information and the application comparison subject reference information are coincident with each other.

4. The tampering monitoring apparatus according to claim 3, wherein the application information tampering verification section (111, 112, 113, 114, 116) verifies whether or not the application information is tampered, by using the tampering verification program stored in the second storage section (130).

5. The tampering monitoring apparatus according to claim 4, wherein the second storage section (130) allows the loaded tampering verification program to be resident therein.

6. The tampering monitoring apparatus according to claim 3, wherein the application information tampering verification section (111, 112, 113, 114, 116) verifies whether or not the application information is tampered, by using the tampering verification program stored in the first storage section (117).

7. The tampering monitoring apparatus according to claim 3, wherein the application information tampering verification section (111, 112, 113, 114, 116) further includes an information changing section (114) for stopping, when the application information comparing section verifies that the application information is tampered, an operation based on the application information.

8. The tampering monitoring apparatus according to claim 2, wherein each of the verification comparison subject information and the verification comparison subject reference information is a hash value of the tampering verification program.

9. The tampering monitoring apparatus according to claim 3, wherein each of the application comparison subject information and the application comparison subject reference information is a hash value of the application information.

10. The tampering monitoring apparatus according to claim 2, wherein each of the verification comparison subject information and the verification comparison subject reference information is an electronic signature of the tampering verification program.

11. The tampering monitoring apparatus according to claim 3, wherein each of the application comparison subject information and the application comparison subject reference information is an electronic signature of the application information.

12. The tampering monitoring apparatus according to claim 2, wherein each of the verification comparison subject information and the verification comparison subject reference information is a version of the tampering verification program.

13. The tampering monitoring apparatus according to claim 3, wherein each of the application comparison subject information and the application comparison subject reference information is a version of the application information.

14. The tampering monitoring apparatus according to claim 1, wherein the at least one program tampering verification section (200) performs verification at a security level higher than that for the application information tampering verification section (111, 112, 113, 114, 116).

15. The tampering monitoring apparatus according to claim 1, comprising a plurality of program tampering verification sections (200-1, 200-2),
wherein, when a verification result from each of the plurality of program tampering verification sections (200-1, 200-2) indicates that the tampering verification program is not tampered, the application information tampering verification section (111, 112, 113, 114, 116) verifies whether or not the application information is tampered, by using the tampering verification program.

16. A tampering monitoring method for monitoring whether or not application information is tampered, the tampering monitoring method comprising:
a step of loading, in response to an instruction for executing a processing, a tampering verification program, stored in a first storage section, for verifying whether or not the application information is tampered, to a second storage section;
a program tampering verifying step of verifying whether or not the tampering verification program, loaded to the second storage section, is tampered; and
an application information tampering verifying step of verifying, in accordance with a verification result, of the program tampering verifying step, indicating that the tampering verification program is not tampered, whether or not the application information is tampered, by executing the tampering verification program.

17. The tampering monitoring method according to claim 16,
wherein the program tampering verifying step includes:
a step of generating verification comparison subject information based on the tampering verification program;
a step of comparing the verification comparison subject information with verification comparison subject reference information indicating that the tampering verification program is not tampered; and
a step of verifying that the tampering verification program is not tampered when the verification comparison subject information and the verification comparison subject reference information are coincident with each other.

18. The tampering monitoring method according to claim 16,
wherein the application information tampering verifying step performs, based on the tampering verification program:
a step of generating application comparison subject information based on the application information;
a step of comparing the application comparison subject information with application comparison subject reference information indicating that the application information is not tampered; and
a step of verifying that the application information is not tampered when the application comparison subject information and the application comparison subject reference information are coincident with each other.

19. The tampering monitoring method according to claim 18, wherein the program tampering verifying step verifies whether or not the application information is tampered, by using the tampering verification program stored in the second storage section.

20. The tampering monitoring method according to claim 18, wherein the application information tampering verifying step verifies whether or not the application information is tampered, by executing the tampering verification program stored in the first storage section.

21. The tampering monitoring method according to claim 18, wherein when the comparing step verifies that the application information is tampered, the application information tampering verifying step further performs, based on the tampering verification program, a step of stopping an operation based on the application information.

22. The tampering monitoring method according to claim 17, wherein each of the verification comparison subject information and the verification comparison subject reference information is a hash value of the tampering verification program.

23. The tampering monitoring method according to claim 18, wherein each of the application comparison subject information and the application comparison subject reference information is a hash value of the application information.

24. The tampering monitoring method according to claim 17, wherein each of the verification comparison subject information and the verification comparison subject reference information is an electronic signature of the tampering verification program.

25. The tampering monitoring method according to claim 18, wherein each of the application comparison subject information and the application comparison subject reference information is an electronic signature of the application information.

26. The tampering monitoring method according to claim 17, wherein each of the verification comparison subject information and the verification comparison subject reference information is a version of the tampering verification program.

27. The tampering monitoring method according to claim 18, wherein each of the application comparison subject information and the application comparison subject reference information is a version of the application information.

28. The tampering monitoring method according to claim 16, wherein the program tampering verifying step performs verification at a security level higher than that of the application information tampering verifying step.
